# EUROPEAN PATENT APPLICATION

(11) **EP 4 718 341 A1**
(43) Date of publication of application: **01.04.2026**
(21) Application number: 24306596.8
(22) Date of filing: 30.09.2024
(51) Int. Cl.: G06N 10/40

(54) **A METHOD FOR BUILDING A TARGET ARRAY OF TRAPPED PARTICLES AND ASSOCIATED COMPUTING SYSTEM**

(71) Applicant: Pasqal, 91300 Massy (FR)
(72) Inventor: MONMEYRAN, Corentin, 91300 MASSY (FR); Ximenez, Bruno, 91300 MASSY (FR)
(74) Representative: Lavoix

(57) **Abstract**

The invention relates to a method for building a target array of trapped particles formed of particles trapped in N trapping sites positioned according to a target geometry, the method comprising:
- determining an initial geometry for the positioning of N trapping sites, as a function of the target geometry, so as to fulfill a rearrangement criterion stating that trapping sites positioned according to the initial geometry enables to reduce the number of moves and/or the distance traveled by particles when rearranging particles stochastically loaded in such trapping sites, as compared to trapping sites positioned according to the target geometry,
- computing a set of parameters for controlling a generator (22) of trapping sites, so as to transform the geometry of trapping sites from the initial geometry to the target geometry.

## Description

### TECHNICAL FIELD OF THE INVENTION

The present invention concerns a method for building an array of trapped particles. The present invention also concerns an associated computing system.

### BACKGROUND OF THE INVENTION

Quantum computing with particles such as neutral cold atoms trapped in optical tweezer traps, requires loading atoms into an array of optical traps, for example at the beginning of every machine cycle. With some atomic loading methods, the loading process occurs stochastically, and the optical traps have a 50% probability of getting filled with an atom. Hence, a rearrangement step is then performed to prepare a register of atoms corresponding to a desired register configuration.

This rearrangement can be performed by moving the atoms individually with one or more moveable optical tweezers. As such, the duration of the moving part of the rearrangement phase scales up-linearly with the number of atoms to move. Moreover, the computational part (assessing which atoms to move, when and where) scales up-linearly. As such, the rearrangement phase is becoming a performance bottleneck for registers above a certain size (e.g. 100 qubits). It is therefore critical to improve the speed and the efficiency of rearrangement to reduce registers with a useful number of atoms.

Depending on the type of array, some rearrangement techniques have thus been developed. An example, in which slalom movements may be performed to move an atom from a source trap to a target trap in between columns and rows, is described in D. Barredo et al, An atom-by-atom assembler of defect-free arbitrary 2d atomic arrays, Science, 3 Nov 2016, Vol 354, Issue 6315, pp. 1021-1023, DOI: 10.1126/science.aah3778, and its supplementary materials.

For slalom trajectory moves, in average a number of N/2 atoms (N being the total number of trapping sites in the array) are moved to successfully reach a defect free register, corresponding to the number of empty traps after loading the atoms on the layout. This implies that:
- Atoms that are already on the register are not moved.
- Atoms are never moved more than once.
- The number of moves is the minimum possible, N/2, and no further optimization is necessary.
- The order in which the moves are performed is not important.

Consequently, this algorithm results in strong gains in computation time, number of displacements and overall traveled distance by the moving atoms.

This type of movement requires an inter-trap distance greater than 5 µm. However, the problem increases a lot in complexity when we consider compact (dense) layouts, i.e., layouts whose distances between neighbor traps are so small that shuffling atoms between the columns and rows is not possible.

This immediately leads to several problems:
- Atoms crossing empty traps may heat up and be lost.
- If there is an atom on the way, this is considered as an obstacle and the obstacle-atom has to be moved, increasing the number of required moves.
- Atoms may be moved more than once, even if they already are in the register, which increases the likelihood of said atoms being lost during the move.
- The order in which the moves are performed is important to avoid collisions, which increases the complexity of the rearrangement algorithms, and hence their execution time.

### SUMMARY OF THE INVENTION

Hence, there exists a need for a solution enabling to ease the rearrangement of particles in trapping sites so as to obtain a target array of trapped particles, whatever the geometry of the target array of trapped particles, that is to say even for compact or arbitrary geometries.

To this end, the invention relates to a method for building target array of trapped particles, the target array of trapped particles being formed of particles trapped in N trapping sites positioned according to a target geometry, the method being implemented by a computing system comprising a quantum processor (and a classical computer, the quantum processor comprising a generator of trapping sites and a rearrangement unit, the method comprising the following steps:
- determining an initial geometry for the positioning of N trapping sites, as a function of the target geometry, so as to fulfill a rearrangement criterion, the rearrangement criterion stating that trapping sites positioned according to the initial geometry enables to reduce the number of moves and/or the distance traveled by particles when rearranging particles stochastically loaded in such trapping sites, as compared to trapping sites positioned according to the target geometry,
- computing a set of parameters for controlling the generator of trapping sites, so as to transform the geometry of trapping sites from the initial geometry to the target geometry,
- generating, by the generator of trapping sites, of N trapping sites positioned according to the initial geometry,
- stochastically loading particles in the N trapping sites,
- rearranging, using the rearrangement unit, particles in the N trapping sites positioned according to the initial geometry, so that each of the N trapping sites is filled with a particle, and
- modifying the parameters of the generator of trapping sites according to the computed set of parameters, until the geometry of the N trapping sites reaches the target geometry, enabling to obtain the target array of trapped particles.

The method according to the invention may comprise one or more of the following features considered alone or in any combination that is technically possible:
- the minimal distance between the trapping sites of the initial geometry is larger than the minimal distance between the trapping sites of the target geometry;
- the minimal distance between the trapping sites of the initial geometry is chosen so as to allow slalom moves when rearranging particles stochastically loaded in trapping sites positioned according to the initial geometry;
- the trapping sites of the initial geometry are aligned along lines and/or columns;
- the computed set of parameters comprises different parameters to be applied at successive timesteps so as to transform the geometry of trapping sites from the initial geometry to the target geometry passing through several intermediate geometries;
- the initial geometry results from a dilatation of the target geometry;
- the generator of trapping sites comprises a spatial-light modulator, the computed set of parameters comprising phase differences which are obtained on the basis of a Gerchberg-Saxton algorithm;
- the rearrangement step comprises the determination of sets of moves for rearranging particles in the trapping sites of the initial geometry, the particles being then moved by the rearrangement unit according to the determined sets of moves;
- the sets of moves are chosen between: single-tweezer moves, multi-tweezer moves and slalom moves;
- the particles are polarizable particles sensitive to alternative current Stark shift from lasers, the particles being preferably neutral atoms, such as Rubidium atoms, Strontium atoms, Cesium atoms or Ytterbium atoms.

The invention also relates to a computing system configured for building a target array of trapped particles as previously described, the computing system comprising:
- a quantum processor comprising:
   - a source of particles,
   - a generator of trapping sites able to generate an array of trapping sites for trapping particles,
   - a rearrangement unit suitable to rearrange particles trapped in the array of trapping sites, and
- a classical computer.

The computing system according to the invention may comprise one or more of the following features considered alone or in any combination that is technically possible:
- the generator of trapping sites comprises a laser source able to generate a laser beam and a beam shaper able to shape the laser beam so as to obtain an array of trapping sites for particles when the laser beam is focused, the computed set of parameters enabling to control the beam shaper;
- the beam shaper comprises at least one among: a spatial light modulator, an acousto-optical deflector, and a digital micromirror device.

### BRIEF DESCRIPTION OF THE DRAWINGS

The invention will be easier to understand in view of the following description, provided solely as an example and with reference to the appended drawings in which:
- Figure 1 is a schematic view of an example of a computing system comprising a quantum processor and a classical computer,
- Figure 2 is a schematic view of an example of a flow chart of a method for building a target array of trapped particles,
- Figure 3 is an example of an initial geometry of trapping sites (left side) and of a target geometry (right side) of trapping sites, the target geometry resulting in a compression of the initial geometry, and
- Figure 4 is another example of a target geometry having an arbitrary shape (not regular and not compact).

### DETAILED DESCRIPTION OF SOME EMBODIMENTS

In the description, the terms "suitable for", "able to" and "configured for" are considered equivalent.

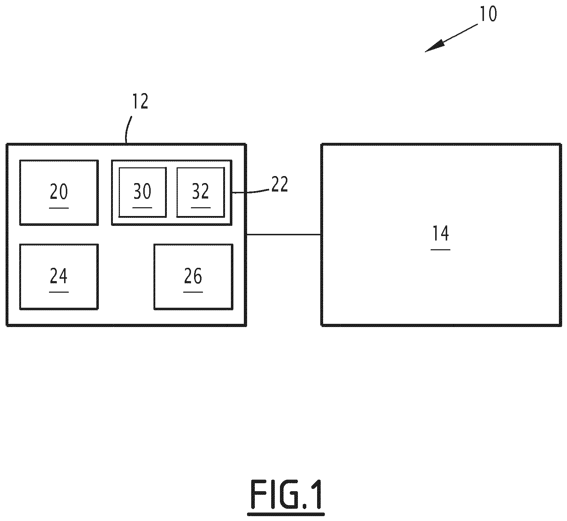

A computing system 10 is illustrated on figure 1. The computing system 10 is configured to implement a method for building a target array of trapped particles. The target array of trapped particles, enables to form a qubit register (or a quantum register) once the trapped particles have been excited into a suitable atomic state (for example using laser light).

The computing system 10 comprises a quantum processor 12 (quantum processing unit or QPU) and a classical computer 14 (or calculator).

In the example of figure 1, the quantum processor 12 comprises a source of particles 20, a generator 22 of trapping sites for particles, a detecting device 24, a rearrangement unit 26 and eventually other hardware elements.

In the case of neutral atoms, in one possible embodiment, the source of particles 20 comprises a vacuum chamber in which the particles (for example atoms) are located. In particular, during use, a vacuum is created in the vacuum chamber and a dilute atomic vapor is formed in the vacuum chamber. Various cooling processes can be used to cool the dilute atomic vapor, for instance laser cooling, so that the atoms can be trapped. Other embodiments are nonetheless possible.

The generator 22 of trapping sites is able to generate a laser beam which when focused generates an array of trapping sites for particles (e.g., optical tweezers).

In an example of implementation, the generator 22 of trapping sites comprises a laser source 30, or equivalent, able to generate a laser beam and a beam shaper 32 able to shape the laser beam (e.g., to impart a specific intensity pattern to the laser beam) so as to obtain an array of trapping sites for particles when the laser beam is focused.

The beam shaper 32 is, for example, a spatial light modulator (SLM), such as an optical phase modulator, preferably a liquid crystal optical modulator (LCOS-SLM). In another example, the beam shaper 32 comprises one or more acousto-optical deflectors (AOD), or a device with metasurfaces, or micro lens arrays. In another example, the beam shaper 32 comprises a digital micromirror device (DMD).

The detecting device 24 is configured to detect the presence of particle(s) in the register. The detecting device 24 is, for example, a camera such as a charge-coupled device (CCD) camera, or an Electron-Multiplying CCD (EMCCD) camera, or any suitable imaging technology. For example, in the case of atoms, the camera is suitable to detect the fluorescence emitted from the atoms.

The rearrangement unit 26 is configured for moving particles from one trapping site to another trapping site. The rearrangement unit 26 comprises a generator of optical moving tweezers. The generator of optical moving tweezers comprises a laser source or equivalent, able to generate a laser beam and a beam shaper able to shape the laser beam (e.g., to impart a specific intensity pattern to the laser beam) so as to obtain an array of optical moving tweezers for particles when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflectors (AOD), or a device with metasurfaces.

The hardware elements enable to manipulate the particles trapped in the trapping sites. This enables to perform quantum operations.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Other embodiments are nonetheless possible. For example, the laser source 30 and/or the beam shaper device 32 may at least partially be incorporated in a photonic integrated circuit.

Typically, the quantum processor 12 uses the quantum properties of matter, such as superposition and entanglement, to perform operations on the qubits. In particular, a qubit refers to a two-level quantum system, although in other embodiments the invention could be applied to a qudit, i.e. a quantum system having more than two quantum states.

In a non-limiting example, a qubit may comprise two basic quantum states I0> and I1 > representing the possible quantum states of the qubit. According to the superposition principle of quantum mechanics, any superposition of the form al0> + bI1> (a and b being complex numbers and aa*+bb*=1) is a possible quantum state of the qubit.

The particles meant to be trapped in the trapping sites are polarizable particles sensitive to alternative current (AC) Stark shift from lasers.

Preferably, the particles are atoms, and in particular electrically neutral atoms. Neutral atoms are, for example, alkali atoms (such as Rubidium or Cesium atoms) or alkaline-earth atoms (such as Strontium or Ytterbium atoms).

In alternative embodiments, the quantum processor 12 may use particles of a different nature, such as trapped ions instead of neutral atoms.

The classical computer 14 comprises typically a processor comprising a data processing unit, memories, and a reader for information media. Eventually, the classical computer 14 comprises a human machine interface, such as a keyboard, and a display.

In an example of implementation, the classical computer 14 interacts with a computer program product. The computer program product comprises an information medium. The information medium is a medium readable by the classical computer 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail some steps of the building method that will be described later in the description, when the computer program is loaded on the processing unit of the classical computer 14.

In a variant, the classical computer 14 is under the form of an electronic circuit comprising microcontrollers or integrated circuits.

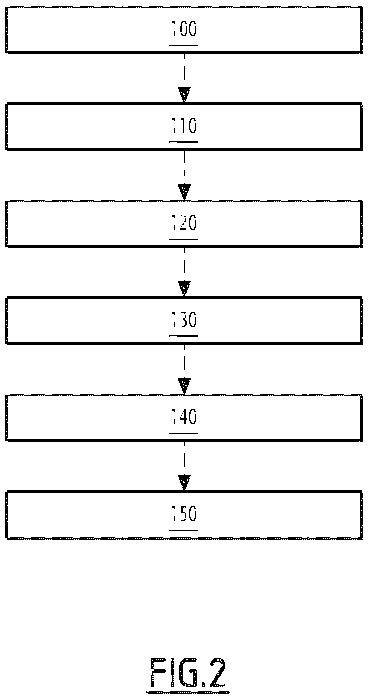

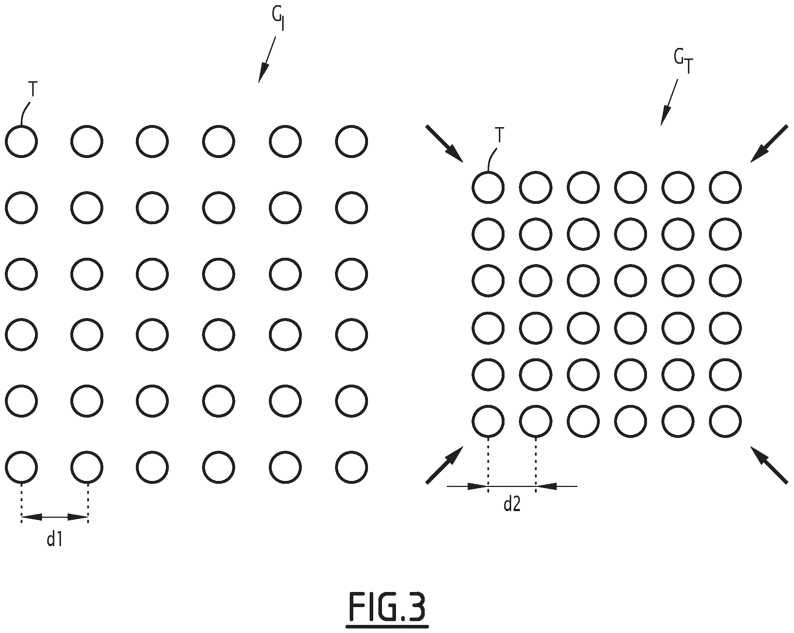

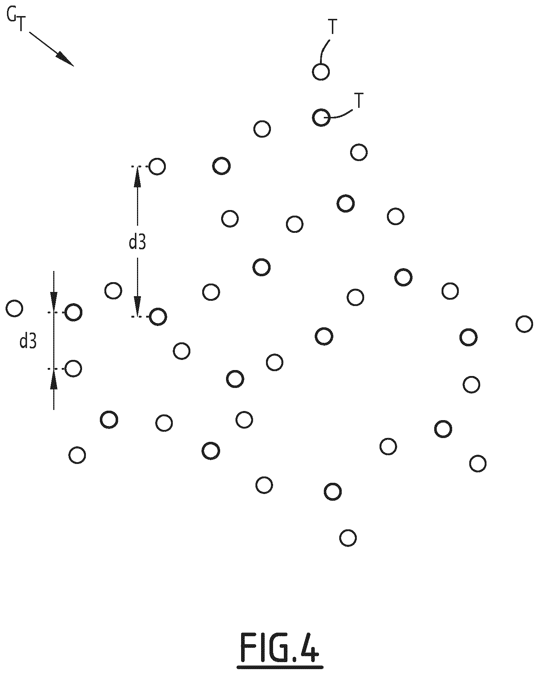

A method for building a target array of trapped particles, will now be described with reference to the organigram of figure 2 and to the specific examples illustrated on figures 3 and 4. The method is implemented by the computing system 10.

The target array of trapped particles is formed of particles trapped in N trapping sites T positioned according to a target geometry G_{T}. N is an integer which is superior to 2, preferably superior to 10. The target array of trapped particles is a specific array than can be compact and/or arbitrary as this will be described later in the description.

The building method comprises a step 100 of determining an initial geometry G_{I} for the positioning of N trapping sites T, as a function of the target geometry G_{T}, so as to fulfill a rearrangement criterion.

The determination step 100 is, for example, implemented by the classical computer 14. The positioning of the trapping sites T according to the target geometry G_{T} and the number N of trapping sites T have typically been received previously by the classical computer 14.

The rearrangement criterion states that trapping sites T positioned according to the initial geometry G_{I} enables to reduce the number of moves and/or the distance traveled by particles when rearranging particles stochastically loaded in such trapping sites T, as compared to trapping sites T positioned according to the target geometry G_{T}.

Preferably, the minimal distance between the trapping sites T of the initial geometry G_{I} is larger than the minimal distance between the trapping sites T of the target geometry G_{T}. The minimal distance is defined as the minimal distance separating the trapping sites T with each other. This enables to ease the rearrangement.

Preferably, the minimal distance between the trapping sites T of the initial geometry G_{I} is chosen so as to allow slalom moves when rearranging particles stochastically loaded in trapping sites T positioned according to the initial geometry G_{I}. A slalom move is a move between an initial trap and a final trap that does not occur in a straight line and the moving atom can pass between traps, occupied or not, without interacting with said traps or the atoms that occupies them if any. The minimal distance between the trapping sites T is therefore large enough so as to allow such slalom moves.

Preferably, the trapping sites T of the initial geometry G_{I} are aligned along lines and/or columns. This enables to use multi-tweezer moves during the rearrangement step, and in particular to more easily determine the sets of moves to be performed during the rearrangement step.

The lines and the columns could be spaced by the same distance. In a variant, the lines and the columns are spaced by different distances.

In an example of implementation, as illustrated on figure 3, the initial geometry G_{I} results from a dilatation of the target geometry G_{T}. In this example, the target array of trapped particles is typically a compact array. The inter-trap distance for the initial geometry G_{I} is noted d1 and the inter-trap distance for the target geometry G_{T} is noted d2. As illustrated on this figure, d1 is bigger than d2. To avoid overloading figure 3, only one reference T for the trapping sites has been added for each array.

In a variant, the target geometry G_{T} can be arbitrary as illustrated on figure 4, or any other possible geometry. The inter-trap distances between two adjacent trapping sites are noted d3 and can take different values because of the arbitrary geometry (only two examples of d3 are shown on figure 4). To avoid overloading figure 4, only two references T for the trapping sites have been added.

Preferably, the area occupied by the initial geometry G_{I} overlap with the area occupied by the target geometry G_{T}. This enables to more easily perform the later transformation from the initial geometry G_{I} to the target geometry G_{T}.

The building method comprises a step 110 of computing a set of parameters for controlling the generator 22 of trapping sites, so as to transform the geometry of trapping sites T from the initial geometry G_{I} to the target geometry G_{T}. The computing step 110 is, for example, implemented by the classical computer 14.

Preferably, the computed set of parameters comprises different parameters to be applied at successive timesteps, so as to transform the geometry of trapping sites T from the initial geometry G_{I} to the target geometry G_{T} passing through several intermediate geometries. This enables to smoothly pass from the initial geometry G_{I} to the target geometry G_{T}, and decreasing the risk of losing trapped particles.

Hence, in the example of figure 3, the computed set of parameters enables to pass from the initial geometry G_{I} (left side) for the positioning of trapping sites T to the target geometry G_{T} (right side).

For example, for a generator 22 of trapping sites comprising a spatial-light modulator, the computed set of parameters comprise phase differences for controlling the spatial-light modulator. In an example, the computation of the phase differences is carried out using a Gerchberg-Saxton algorithm. Such a Gerchberg-Saxton algorithm could have been adapted to include specific corrections. In another example, for a generator 22 of trapping sites comprising an acousto-optic deflector, the computed set of parameters comprise RF frequencies (radiofrequencies) for controlling the acousto-optic deflector. In an example, the computation of the RF frequencies is carried out using trigonometry to obtain angles and then a conversion of the angles into frequency. In another example, the RF frequencies values may be computed by a FPGA (Field-Programmable Gate Array).

In another example, for a generator 22 of trapping sites comprising a digital micromirror device, the computed set of parameters comprise angles of rotation for each micromirror. For example, the computation of the angles of rotation is carried out using a diffraction grating equation.

The building method comprises a step 120 of generating, by the generator 22 of trapping sites, of N trapping sites T positioned according to the initial geometry G_{I}.

The building method comprises a step 130 of stochastically loading particles in the N trapping sites T. The loading step 130 is for example carried out using the source of particles 20.

Statistically, an average of N/2 trapping sites T are filled with a particle during this step.

The building method comprises a step 140 of rearranging, particles in the N trapping sites T positioned according to the initial geometry G_{I}, so that each of the N trapping sites T is filled with a particle. The rearranging step 140 is for example carried out by the classical computer 14 and the rearrangement unit 26.

Preferably, the rearrangement step comprises the determination, by the classical computer 14, of sets of moves for rearranging particles in the trapping sites T of the initial geometry G_{I}. The particles are then moved by the rearrangement unit 26 according to the determined sets of moves.

For example, the sets of moves are chosen between at least one of the following move strategies: single-tweezer moves, multi-tweezer moves and slalom moves. The single tweezer moves allow individual moves, such as slalom moves. The multi-tweezer moves allow moving together of several particles or group of particles.

The determination of the sets of moves is for example carried out using an algorithm such as a rearrangement algorithm described in one of the following article:
- For single tweezer-moves: Kai-Niklas Schymik, Vincent Lienhard, Daniel Barredo, Pascal Scholl, Hannah Williams, Antoine Browaeys, and Thierry Lahaye Enhanced atom-by-atom assembly of arbitrary tweezer arrays Phys. Rev. A 102, 063107 (2020).
- For multi-tweezer moves: Weikun Tian, Wen Jun Wee, An Qu, Billy Jun Ming Lim, Prithvi Raj Datla, Vanessa Pei Wen Koh, and Huanqian Loh Parallel assembly of arbitrary defect-free atom arrays with a multi-tweezer algorithm Phys. Rev. Applied 19, 034048.

Other rearrangement algorithms can also be used.

The building method comprises a step 150 of modifying the parameters of the generator 22 of trapping sites T according to the computed set of parameters, until the geometry of the N trapping sites T reaches the target geometry G_{T}, enabling to obtain the target array of trapped particles. The modification step 150 is, for example, carried out by the generator 22 of trapping sites T.

For example, in the case of figure 3, this enables to obtain a target array of trapped particles having the target geometry G_{T} of the right side of the figure.

Hence, by passing from an initial geometry G_{I} for the positioning of trapping sites T to a target geometry G_{T}, the building method enables to ease the rearrangement.

In other words, the distance between trap sites of the register array can be adjusted after the rearrangement phase to allow a more efficient rearrangement of the trapped atoms (e.g., to use a "slalom" trajectory to move trapped atoms). For example, if a compact register array is desired (due to technical constraints or decided by the client), we may start with a large array (one in which the inter-trap distances are higher than desired). The rearrangement step is done after the stochastic loading. This allows to do slalom rearrangement (because of the higher inter-trap distances, atoms can be moved between trap sites without risk of collision with other trapped atoms).

After the rearrangement, the array is compacted by changing the settings of the generator 22 of trapping sites (whether the generator 22 comprises SLM, DMD, MEMS...) to reduce the distance between trap sites and obtain the desired register on which the quantum computation will be performed. To do so, in an embodiment using SLM, phase patterns are precalculated and sent to the SLM (fast-SLM). The SLM runs several phase patterns step by step to compact the array. At the end, it is possible to have a defect-free array.

This solution enables to reduce the number of moves and/or the distance traveled by particles when rearranging particles stochastically. This entails a gain in the speed of the computation move and in the speed of the rearrangement itself. The exact gains on both features is strongly dependent on the layout size and its geometry, but is significant for large layouts (at least 100 atoms).

This method is compatible with all geometries of registers, and in particular with compact and arbitrary registers. The method is compatible with 1-dimensional, 2-dimensionals and 3-dimensionals registers.

The person skilled in the art will understand that the embodiments and variants described above in the description can all be combined provided that they are technically compatible. Many other embodiments are possible without departing from the scope of the invention defined in the appended claims.

## Claims

1. A method for building a target array of trapped particles, the target array of trapped particles being formed of particles trapped in N trapping sites (T) positioned according to a target geometry (G_{T}), the method being implemented by a computing system (10) comprising a quantum processor (12) and a classical computer (14), the quantum processor (12) comprising a generator (22) of trapping sites and a rearrangement unit (26), the method comprising the following steps:
- determining an initial geometry (G_{I}) for the positioning of N trapping sites (T), as a function of the target geometry (G_{T}), so as to fulfill a rearrangement criterion, the rearrangement criterion stating that trapping sites (T) positioned according to the initial geometry (G_{I}) enables to reduce the number of moves and/or the distance traveled by particles when rearranging particles stochastically loaded in such trapping sites (T), as compared to trapping sites (T) positioned according to the target geometry (G_{T}),
- computing a set of parameters for controlling the generator (22) of trapping sites (T), so as to transform the geometry of trapping sites (T) from the initial geometry (G_{I}) to the target geometry (G_{T}),
- generating, by the generator (22) of trapping sites (T), of N trapping sites (T) positioned according to the initial geometry (G_{I}),
- stochastically loading particles in the N trapping sites (T),
- rearranging, using the rearrangement unit (26), particles in the N trapping sites (T) positioned according to the initial geometry (G_{I}), so that each of the N trapping sites (T) is filled with a particle, and
- modifying the parameters of the generator (22) of trapping sites (T) according to the computed set of parameters, until the geometry of the N trapping sites (T) reaches the target geometry (G_{T}), enabling to obtain the target array of trapped particles.

2. A method according to claim 1, wherein the minimal distance between the trapping sites (T) of the initial geometry (G_{I}) is larger than the minimal distance between the trapping sites (T) of the target geometry (G_{T}).

3. A method according to claim 2, wherein the minimal distance between the trapping sites (T) of the initial geometry (G_{I}) is chosen so as to allow slalom moves when rearranging particles stochastically loaded in trapping sites (T) positioned according to the initial geometry (G_{I}).

4. A method according to any one of claims 1 to 3, wherein the trapping sites (T) of the initial geometry (G_{I}) are aligned along lines and/or columns.

5. A method according to any one of claims 1 to 4, wherein the computed set of parameters comprises different parameters to be applied at successive timesteps so as to transform the geometry of trapping sites (T) from the initial geometry (G_{I}) to the target geometry (G_{T}) passing through several intermediate geometries.

6. A method according to any one of claims 1 to 5, wherein the initial geometry (G_{I}) results from a dilatation of the target geometry (G_{T}).

7. A method according to any one of claims 1 to 6, wherein the generator (22) of trapping sites comprises a spatial-light modulator, the computed set of parameters comprising phase differences which are obtained on the basis of a Gerchberg-Saxton algorithm.

8. A method according to any one of claims 1 to 7, wherein the rearrangement step comprises the determination of sets of moves for rearranging particles in the trapping sites (T) of the initial geometry (G_{I}), the particles being then moved by the rearrangement unit (26) according to the determined sets of moves.

9. A method according to claim 8, wherein the sets of moves are chosen between: single-tweezer moves, multi-tweezer moves and slalom moves.

10. A method according to any one of claims 1 to 9, wherein the particles are polarizable particles sensitive to alternative current Stark shift from lasers, the particles being preferably neutral atoms, such as Rubidium atoms, Strontium atoms, Cesium atoms or Ytterbium atoms.

11. A computing system (10) configured for building a target array of trapped particles according to any one of claims 1 to 10, the computing system (10) comprising:
- a quantum processor (12) comprising:
• a source of particles (20),
• a generator (22) of trapping sites able to generate an array of trapping sites (T) for trapping particles,
• a rearrangement unit (26) suitable to rearrange particles trapped in the array of trapping sites (T), and
- a classical computer (14).

12. A computing system (10) according to claim 11, wherein the generator (22) of trapping sites comprises a laser source (30) able to generate a laser beam and a beam shaper (32) able to shape the laser beam so as to obtain an array of trapping sites (T) for particles when the laser beam is focused, the computed set of parameters enabling to control the beam shaper.

13. A computing system (10) according to claim 12, wherein the beam shaper (32) comprises at least one among: a spatial light modulator, an acousto-optical deflector, and a digital micromirror device.
